Europäisches Patentamt

European Patent Office

Office européen des brevets

(19)

(11) Veröffentlichungsnummer: **0 270 967 B1**

(12)

# EUROPÄISCHE PATENTSCHRIFT

(45) Veröffentlichungstag der Patentschrift: **18.11.93**

(51) Int. Cl.5: **G02B 23/16**, G02B 7/18, F15B 15/10

(21) Anmeldenummer: **87117657.4**

(22) Anmeldetag: **28.11.87**

(54) Unterstützungssystem für Teleskopspiegel.

(30) Priorität: **10.12.86 DE 3642128**

(43) Veröffentlichungstag der Anmeldung:
**15.06.88 Patentblatt 88/24**

(45) Bekanntmachung des Hinweises auf die
Patenterteilung:
**18.11.93 Patentblatt 93/46**

(84) Benannte Vertragsstaaten:
**DE FR GB IT**

(56) Entgegenhaltungen:
DE-C- 3 521 973
FR-A- 1 473 976

**ZEISS INFORMATIONEN, Band 27, Heft 94,
1982, Seiten 4-13, Oberkochen, D; C. KÜHNE:
"Zeiss 3,5-m-Teleskop, ein astronomisches
Grossteleskop im Grenzbereich technischer
Leistungen"**

(73) Patentinhaber: **Firma Carl Zeiss**

**D-73446 Oberkochen(DE)**

(84) Benannte Vertragsstaaten:
**DE FR IT**

(73) Patentinhaber: **CARL ZEISS-STIFTUNG HAN-
DELND ALS CARL ZEISS**

**D-7920 Heidenheim (Brenz)(DE)**

(84) Benannte Vertragsstaaten:
**GB**

(72) Erfinder: **Meier, Hans-Jürgen
Langertstrasse 58
D-7080 Aalen(DE)**

EP 0 270 967 B1

EP 0 270 967 B1

**Beschreibung**

Beim Bau von astronomischen Spiegelteleskopen muß dafür Sorge getragen werden, daß der Spiegel in jeder Lage, d.h. unabhängig von der Neigung seiner Fläche zur Richtung der Schwerkraft, seine Forr unverändert beibehält. Die üblichen Anforderungen an die Formtreue liegen bei wenigen 10nm RMS.

Dazu ist eine spezielle Lagerung des Spiegels erforderlich, die außerdem die Aufgabe hat, Deformationen vom Spiegel fernzuhalten, die unvermeidbar von der Trägerstruktur infolge äußerer Kräfte und Temperaturschwankungen eingeleitet werden. Bei großen Teleskopen liegen diese Deformationen im Bereich von einigen 100um, liegen also um mehrere Größenordnungen über der gewünschten Formtreue.

Bisher wurden zur Lagerung solcher Spiegel fast ausschließlich passive Unterstützungssysteme zur Aufnahme der achsialen und der radialen Spiegellast verwendet. Bekannte achsiale Unterstützungssysteme, wie sie z.B. in den ZEISS-Informationen, 27 (1982) Heft 94, Seite 8-9 beschrieben sind, verteilen die Stützkräfte gleichmäßig durch hinreichend Viele einzelne Stützpunkte auf der Rückseite des Spiegels. Anzahl und Anordnung der Stützpunkte hängen von der Größe, dem Gesamtgewicht und der Biegesteifigkeit des Spiegels ab.

Seit geraumer Zeit besteht die Tendenz die Spiegel immer dünner, ihre Fläche jedoch immer größer zu machen. Um die gleichzeitig gestiegenen Ansprüche an die Formtreue der Spiegel trotz verringerter Biegesteifigkeit sicherzustellen, sollen die Spiegel durch gezielt aufgebrachte äußere Kräfte in die korrekte Form gezwungen werden. Hierzu ist bereits vorgeschlagen worden, eine sogenannte "aktive" Lagerung einzusetzen, in der die auf die Stützpunkte des achsialen Unterstützungssystems wirkenden Kräfte von einem Computer berechnet und auf die Spiegelrückseite durch Aktuatoren aufgebracht werden, deren Kräfte entsprechend der vom Computer berechneten Verteilung individuell geregelt werden.

Bei richtiger Einstellung der von den Aktuatoren ausgeübten Kräfte kann der Spiegel gezielt im Sinne einer Wiederherstellung der gestörten Formtreue deformiert werden. Dabei können zusätzlich auch Restfehler aus der Bearbeitung der Spiegeloberfläche ausgeglichen werden.

Ein solches Unterstützungssystem ist z.B. aus den Proceedings of the IAU Colloquium No. 79: "Very Large Telescopes, their Instrumentation and Programs" Garching, 9.-12. April 1984, Seite 23-40 bekannt. Die dort vorgeschlagenen Aktuatoren bestehen aus zwei wesentlichen Elementen: einem Sensor, der die auf den jeweiligen Stützpunkt wirkende Teillast des Spiegels mißt, und einer elektromagnetischen Einrichtung in Form eines motorisch angetriebenen Hebelsystems, das die vorausberechnete Kraft aufbringt. Mit Hilfe einer Regeleinrichtung wird der Motor so verstellt, daß die vom Sensor gemessene Kraft einem berechneten Wert entspricht, der sich aus der passiven Grundlast und der für die Deformation nötigen Zusatzkraft zusammensetzt.

Da bei diesem System der zu regelnde Teilbetrag der Stützkraft sehr klein ist und etwa nur 1°/oo der Gesamtkraft eines Stützpunktes ausmacht, der zur Kraftsteuerung eingesetzte Sensor aber die Gesamtkraft mißt, werden sehr hohe Anforderungen an Genauigkeit und zeitliche Stabilität des Sensors gestellt, die sich nicht voll erfüllen lassen. Demzufolge ist es schwierig, die vorausberechnete ideale Kraftverteilung tatsächlich auf die Spiegelrückseite aufzubringen. Diese Schwierigkeit ist insbesondere dadurch bedingt, daß eine gezielt aufgebrachte Zusatzkraft an einem Punkt eine Änderung der Kräfte aller anderen Punkte erfordert, die sich nicht von selbst, sondern wiederum nur durch aktive Steuerungen aller anderen Punkte einstellt.

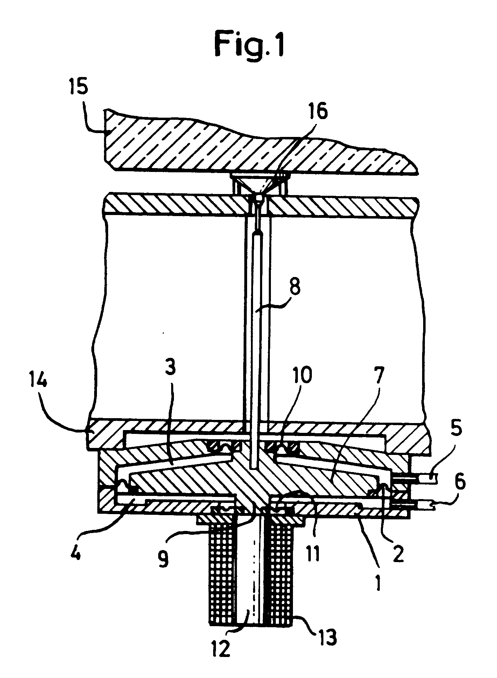

Aus der DE-PS 35 21 973 ist ein Unterstützungssystem für Teleskopspiegel bekannt, das zusätzlich zu der aktiven Lagerung, die mit Hilfe von Aktuatoren auf den Spiegel an den einzelnen Stützpunkten individuell einstellbare Zusatzkräfte aufzubringen erlaubt, eine passive Lagerung in Form eines lastverzweigten hydraulischen Systems vorsieht. Die Aktuatoren sind dort Linearmotoren, die kraftschlüssig mit den Stützen der passiven Lagerung verbunden sind. In der Figur 1 ist der Aufbau eines Stützpunktes nach diesem bekannten Unterstützungssystem dargestellt:

Jeder Stützpunkt besteht aus einem Gehäuse (1), das durch eine Membran (2) in eine obere Kammer (3) und eine untere Kammer (4) geteilt wird. Die Kammern sind mit einer hydraulischen Flüssigkeit gefüllt, die zum Zwecke des Druckausgleiches durch Rohre (5,6) mit den entsprechenden Kammern der anderen Stützpunkte des Systems verbunden sind. Die Membran (2) trägt im Zentrum einen Teller (7), der mit einem Stößel (8) und dem daran befestigten Teller (16) zum Tragen des Spiegels und mit einem Stößel (9) zur Aufbringung der berechneten Zusatzkraft für die aktive Spiegeldeformation verbunden ist. Die Stößel (8 und 9) sind mit Hilfe von Membranen (10 und 11) gegen das Gehäuse (1) abgedichtet.

Infolge der Aufteilung in die zwei Kammern (3 und 4) entstehen zwei voneinander abgeschlossene Drucksysteme. Befände sich der Spiegel (15) stets in waagerechter Lage, dann wären nur die unteren Kammerhälften (4) erforderlich. Da der Spiegel aber gekippt werden muß und bei Schräglage das Eigengewicht der hydraulischen Flüssigkeit zusätzlich auf die Stützpunkte wirkt, und zwar unterschiedlich abhängig von ihrer Lage, sind die oberen Kammerhälften (3) vorgesehen, die diesen zusätzlichen Druck

2

kompensieren.

Die als Stößel (9) ausgebildete untere Fortsetzung des Drucktellers (7) ist mit dem permanentmagnetischen Anker (12) eines Linearmotores verbunden. Der Anker (12) übt eine Kraft in Richtung des Stößels (9) aus, die proportional zum Strom durch die den Anker (12) umgebende Spule ist. Diese Kraft wird über den Stößel (9), den Teller (7), den Stößel (8) und den Tragteller (16) direkt auf die Rückseite des zu lagernden Spiegels übertragen und somit der Tragkraft des Tellers (7) des passiven hydraulischen Stützsystems überlagert.

Das bekannte Unterstützungssystem ist zwar in Bezug auf die Grundlast des Spiegels selbsteinstellend und erfordert lediglich eine Regelung der für die aktive Lagerung nötigen Zusatzkraft. Es besitzt jedoch den Nachteil, daß auch im stationären Zustand Energie in den Linearmotoren an den Unterstützungspunkten umgesetzt wird. Dadurch entstehen lokale Wärmequellen, die den Spiegel und das Unterstützungssystem verformen können.

Es ist die Aufgabe der vorliegenden Erfindung ein aktiv arbeitendes Unterstützungssystem zu schaffen, welches ohne Energieverbrauch im stationären Zustand arbeitet und in Verbindung mit einem passiven astatischen Lagerungssystem auf hydraulischer Basis betrieben werden kann.

Diese Aufgabe wird durch eine Ausbildung gemäß den im kennzeichrenden Teil des Hauptanspruches angegebenen Maßnahmen gelöst.

Bei der erfindungsgemäßen Lösung werden die für die aktive Lagerung benötigten Zusatzkräfte an den Unterstützungspunkten des Spiegels von dem bereits vorhandenen Druck im hydraulischen System der passiven Lagerung abgenommen, von der die Grundlast des Spiegels getragen wird. Der Betrag dieser Zusatzkraft läßt sich einstellen, indem die wirksame Fläche des Drucktellers bzw. des ihn umgebenden Gehäuses an dem jeweiligen Stützpunkt variiert wird. Trotzdem bleibt die vom passiven hydraulischen System aufgenommene Grundlast vom aktiven System völlig entkoppelt. Diese Art der Regelung der Zusatzkraft arbeitet ohne Energieverbrauch im stationären Betrieb, so daß thermische Störungen des Spiegels durch die aktive Lagerung nicht entstehen können.

Das erfindungsgemäße Unterstützungssystem ist nicht nur für Spiegel geeignet, die auf der Erde unter dem Einfluß von Schwerkraft betrieben werden, sondern kann auch im schwerelosen Bereich, d.h. für außerhalb der Atmosphäre betriebene Spiegel eingesetzt werden. Dort hat das hydraulische, passive System zwar keine Grundlast (Spiegelgewicht) aufzunehmen, das lastverzweigte hydraulische System sorgt jedoch dafür, daß die Gegenkraft zu der an einem Punkt aufzubringenden Zusatzkraft für die aktive Lagerung sich auf die übrigen Punkte der Lagerung gleichmäßig verteilt. Der Aufwand zur Regelung der für die aktive Lagerung nötigen Zusatzkräfte kann deshalb sehr gering gehalten werden.

Ein wesentlicher Punkt der Erfindung ist die Art und Weise, in der die effektiv wirksame Fläche im passiven hydraulischen Lagerungssystems gezielt verändert wird. Dazu ist ein versteifbarer Balg vorgesehen, der entweder Teil des Drucktellers oder der Kammer ist, die den Druckteller umgibt. Dies wird in der nachstehenden Beschreibung von Ausführungsbeispielen anhand der Figuren 1-5 der beigefügten Zeichnungen noch näher erläutert:

Figur 1      ist eine detaillierte Schnittdarstellung der Teile eines Stützpunktes einer kombinierten aktiven und passiven Lagerung nach dem Stand der Technik;

Figur 2      ist eine Prinzipskizze, die einen gemäß der Erfindung ausgebildeten Druckteller am Stützpunkt eines kombiniert aktiven und passiven Unterstützungssystems im Schnitt zeigt;

Figur 3      ist eine Prinzipskizze eines Aktuators, mit dem die effektiv wirksame Fläche des Drucktellers (27) aus Figur 2 bzw. des Drucktellers (67) aus Figur 5 eingestellt werden kann;

Figur 4      ist eine alternative Ausführungsform für den in Figur 3 dargestellten Aktuator;

Figur 5      ist eine alternative Ausführungsform eines gemäß der Erfindung ausgebildeten Drucktellers am Stützpunkt eines kombiniert aktiven und passiven Unterstützungssystems;

Figur 6a und 6b      sind vereinfachte Prinzipskizzen zur Erläuterung der Variation der effektiv wirksamen Fläche am Druckteller (67) nach Figur 5.

Figur 1 wurde schon einleitend bei der Beschreibung des Standes der Technik näher erläutert. Zum besseren Verständnis der Wirkungsweise einer kombiniert aktiv und passiven Spiegellagerung wird auf die einleitend genannte DE-PS 35 21 973 an dieser Stelle verwiesen.

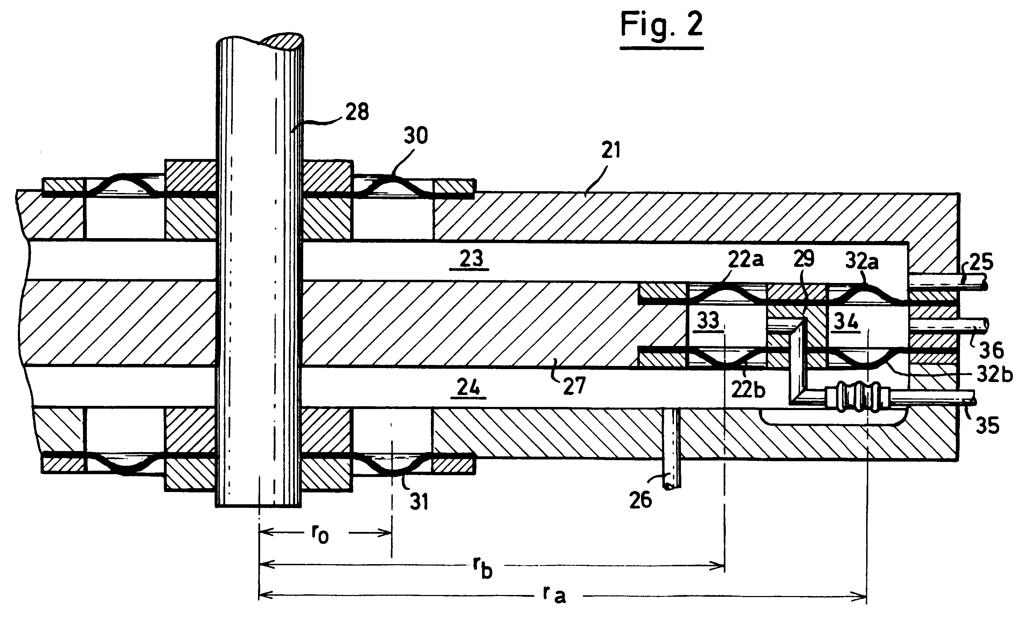

Gemäß der vorliegenden Erfindung kann auf den Linearmotor (12/13) an den in Figur 1 dargestellten Stützpunkten verzichtet werden: Dazu wird der Druckteller (7) so wie in Figur 2 dargestellt abgeändert.

In Figur 2 ist der Stößel, der die Spiegellast an einem der Unterstützungspunkte trägt, mit (28) bezeichnet. Dieser Stößel (28) ist nach wie vor mit dem Druckteller (27) in dem Gehäuse (21) verbunden,

EP 0 270 967 B1

das die beiden mit (23 und 24) bezeichneten Druckkammern umgibt. Membranen (30 und 31) dienen dazu den beweglich gelagerten Stößel (28) gegen das Gehäuse (21) abzudichten. Die Kammern (23 und 24) entsprechen den Druckkammern (3 und 4) nach Figur 1 und sind auch in diesem Falle voneinander getrennt. Zur Verbindung mit den entsprechenden Kammern ar den anderen Stützpunkten des Spiegels sind die beiden Rohrleitungen (25 und 26) vorgesehen, die in die Kammern (23 bzw. 24) münden.

Die vom Stößel (28) auf den Spiegel ausgeübte Gesamtkraft $Q_{ges}$ ergibt sich zu

$$Q_{ges} = (P_{23} - P_{24}) \cdot \pi \cdot (r_{eff}^2 - r_o^2) \qquad (1)$$

hierbei sind:

$r_{eff}$ der effektive Außenradius des kreisförmigen Drucktellers (27), der dessen effektive Fläche $Fl_{eff}$ bestimmt, und

$r_o$ der Innenradius, der den nicht wirksamen inneren Teil des Drucktellers (27) ausgrenzt.

Im Gegensatz zu einer Lagerung nach dem Stand der Technik gemäß Figur 1 sind die beiden Kammern (23 und 24) nicht durch eine einfache Membran voneinander getrennt, sondern es sind zwei Doppelmembranen (22a,22b) und (32a,32b) vorgesehen, die durch einen starren Zwischenring (29) miteinander verbunden sind. Die Doppelmembran (22a,22b) ist dabei einseitig mit dem Druckteller (27) verbunden und die Doppelmembran (32a,32b) einseitig am Gehäuse (21) befestigt, das den Druckteller (27) umgibt. Somit schließt jede Doppelmembran einen ringförmigen Hohlraum (33 bzw. 34) ein.

Die Hohlräume (33 und 34) sind an zwei weitere Druckleitungen (35 und 36) angeschlossen. Wird einer der Hohlräume (33 oder 34) nun mit Druck beaufschlagt, so versteift sich der jeweilige, aus den Doppelmembranen (22a, 22b) oder (32a,32b) gebildete Balg. Durch diese Versteifung wird der Zwischenring (29) mehr oder weniger stark kraftschlüssig

a) an den Druckteller (27) angekoppelt, oder

b) an das Gehäuse (21) angekoppelt,

je nachdem welcher der beiden Bälge (32 oder 22) stärker versteift wird.

Betrachtet man rein phänomenologisch die beiden Fälle a) und b) in ihren Grenzwerten, d.h. wenn jeweils einer der beiden Bälge fest aufgeblasen und der andere drucklos ist, so ist leicht einzusehen, daß in diesen beiden Fällen der effektive Radius $r_{eff}$ des mit dem Stößel (28) verbundenen Drucktellers (27) unterschiedlich ist und die in Figur 2 mit $r_a$ und $r_b$ bezeichneten Werte annehmen kann. Da die Kraft, die der Stößel (28) an dem zugehörigen Stützpunkt auf den zu lagernden Spiegel ausübt, der Fläche des Drucktellers (27) proportional ist, kann also durch die eben geschilderte Änderung des effektiven Radius $r_{eff}$ bzw. der effektiven Fläche $Fl_{eff}$ des Drucktellers (27) die für die aktive Spiegellagerung erforderliche variable Zusatzkraft erzeugt werden, indem nämlich der Druck in den Kammern (33 und 34) gegenläufig zueinander verändert wird.

Hierbei ist zu berücksichtigen, daß sich der effektive Radius des Drucktellers (27) stufenlos zwischen den genannten Grenzwerten $r_a$ und $r_b$ einstellen läßt und eine Funktion der Drücke ($P_{33}$ und $P_{34}$) im Innern der Bälge (22 und 32) ist.

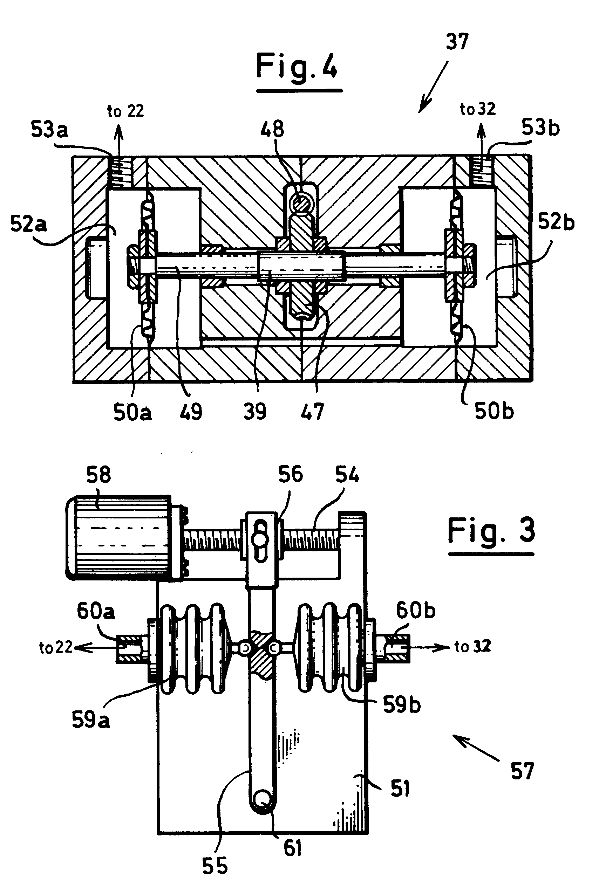

Das Innere (33 und 34) der Bälge (22 und 32) ist über Zuleitungen (35 bzw. 36) mit den Öffnungen (60a und 60b) eines Aktuatorelementes in Form einer elektrisch einstellbaren Druckdose verbunden, wie sie in dem Ausführungsbeispiel nach Figur 3 dargestellt ist.

Das dort mit (57) bezeichnete Aktuatorelement besteht aus zwei einander gegenüberliegenden Druckkörpern (59a und 59b), die an einer Seite, und zwar an der Seite ihrer Auslaßöffnungen (60a und 60b) auf einer gemeinsamen Grundplatte (51) befestigt sind. Das Volumen der Druckkörper (59a und 59b) läßt sich mit Hilfe eines um die Achse (61) schwenkbaren Hebels (55) gegenläufig verändern. Dazu ist der Schwenkhebel (55) mit einer Mutter (56) versehen, die von einer mit einem Elektromotor (58) verbundenen Gewindespindel (54) angetrieben wird. Um eine aktive Spiegellagerung realisieren zu können, ist selbstverständlich für jeden Stützpunkt ein separates, eigenes Aktuatorelement (57) vorzusehen, dessen Motor (58) entsprechend den festgestellten Formänderungen des Spiegels an diesem Punkt verstellt wird, wodurch dann der Druck in den Hohlräumen (33 und 34) und damit die Steifigkeit der Bälge (22 und 32) gezielt eingestellt wird.

Ein weiteres, zwar im konstruktiven Aufbau nicht aber in der Funktionsweise abgeändertes Ausführungsbeispiel für einen Aktuator ist in Figur 4 dargestellt.

Hier wird von der Schnecke (48) auf der Welle eines im gezeichneten Schnitt nicht sichtbaren Motors ein

4

Ritzel (47) angetrieben, welches auf eine Gewindemutter (39) aufgesetzt ist. Diese Mutter (39) treibt eine Gewindespindel (49) an, mit der die Membranen (50a und 50b) zweier Druckdosen (52a und 52b) starr miteinander verbunden sind. Entsprechend läßt sich auch mit diesem Aktuator der Druck in den an die Öffnungen (53a und 53b) der Druckdosen (52a bzw. 52b) angeschlossenen Systeme, d.h. die Steifigkeit der beiden damit verbundenen Bälge (22 und 32) einstellen.

Das Erzeugen der Zusatzkräfte für die aktive Spiegellagerung ist mit dem in Figur 2 dargestellten Ausführungsbeispiel nur dann möglich, wenn eine Druckdifferenz in den beiden Kammern (23 und 24) vorliegt, d.h. wenn die Drücke $P_{23}$ und $P_{24}$ voneinander verschieden sind (vergl. Gleichung 1).

Dieser Fall ist für terrestrisch aufgestellte Spiegel immer erfüllt, da ja gerade die Druckdifferenz $P_{23}$-$P_{24}$ dazu dient, das Spiegelgewicht zu tragen.

Das anhand von Figur 2 aufgezeigte Prinzip läßt sich jedoch auch zur aktiven Deformation von Spiegeln einsetzen, die sich im schwerelosen Raum befinden. Da in diesem Falle - vorausgesetzt es wird ein hydraulisch lastverzweigtes System von Stutzpunkten am Spiegel eingesetzt - die Drücke $P_{23}$ und $P_{24}$ in den beiden Kammern (23 und 24) nach Figur 2 gleich sind, kann jedoch die aktive Zusatzkraft nicht dadurch erzeugt werden, daß man die effektive Fläche des Drucktellers (27) für beide Kammern (23 und 24) gleichmäßig verändert. Die Zusatzkraft muß vielmehr durch eine Unsymmetrie in den an die Kammern (23 und 24) grenzenden Flächen des Drucktellers (27) erzeugt werden.

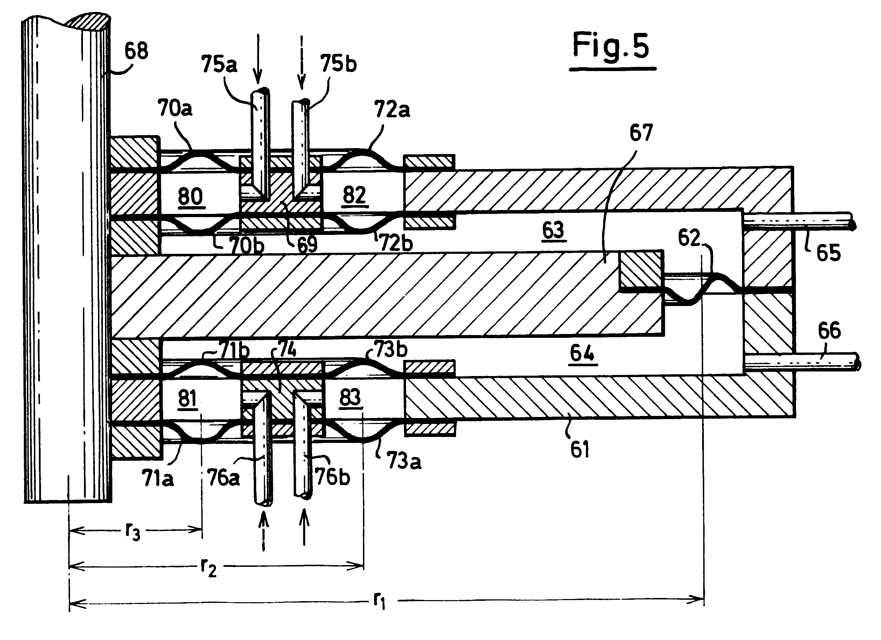

Dieser Fall ist in dem Ausführungsbeispiel nach Figur 5 dargestellt:

Hier ist der mit dem Druckteller (67) verbundene Stößel (68) gegen das Gehäuse (61), das die beiden Druckkammern (63 und 64) umgibt, am oberen und am unteren Ende über zwei konzentrisch angeordnete Paare von versteifbaren Bälgen gegen das Gehäuse (61) abgedichtet. Das Balgpaar (70/72) am oberen Ende und das Balgpaar (71/73) am unteren Ende des Stößels (68) bestehen ebenso wie das Balgpaar (22/32) im Ausführungsbeispiel nach Figur 2 wieder aus zwei gegenuberliegenden Einzelmembranen (70a/70b) und (72a/72b) bzw. (71a/71b) und (73a/73b) und sind durch einen starren Zwischenring (69 bzw. 74) voneinander getrennt. An den Zwischenringen (69 und 74) sind die Zuführungsleitungen angebracht, mit denen die Hohlräume (80 und 82) sowie (81 und 83) zwischen den Membranen mit Druck beaufschlagt und die von den Membranen gebildeten Bälge versteift werden können.

Um bei gleichem Druck in den beiden Kammern (63 und 64) eine Kraft auf den Druckteller (67) zu erzeugen, werden die Leitungen (75a und 76b) und die Leitungen (75b und 76a) jeweils an die gleiche Druckdose des dazu verwendeten Aktuators nach Figur 3 oder Figur 4 angeschlossen und der Druck in den Hohlräumen (80 und 83) der Bälge (70 und 72) gleichläufig, jedoch gegenläufig zum Druck in den Hohlräumen (81 und 82) der Bälge (71 und 73) verändert.

Durch diese Maßnahme wird die obere und die untere Wandung des Gehäuses (61) in ihrem Innenradius und der daran anschließende, zum Stößel (68) bzw. Druckteller (67) gehörige Teil in seinem Außenradius auf der Oberseite und der Unterseite des Gehäuses (61) gegenläufig variiert. Denn der Zwischenring (69) beispielsweise wird an das Gehäuse (61) und der Zwischenring (74) wird an den Stößel (68) angeschlossen, um in der anhand von Figur 2 begonnenen, phänomenologischen Beschreibungsweise zu bleiben.

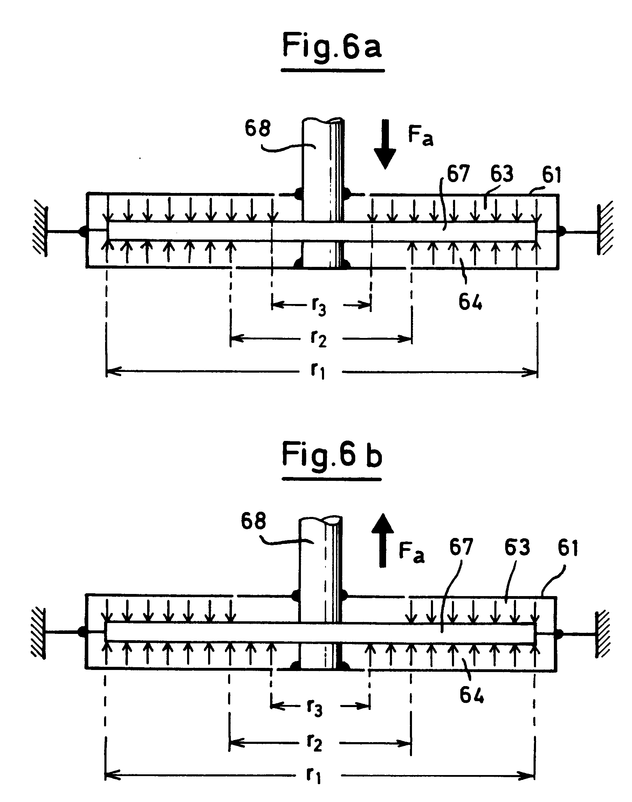

Das Resultat ist in der Darstellung nach Figur 6a und 6b ersichtlich. Wenn die Hohlräume (82 und 81) mit Druck beaufschlagt werden, und damit die Bälge (72 und 71) versteift werden, liegt der in Figur 6a skizzierte Fall vor: Die an die Druckkammer (63) grenzende Fläche des Drucktellers (67) ist größer als die an die Druckkammer (64) grenzende Fläche des Drucktellers (67). Daraus ergibt sich die nach unten gerichtete resultierende Gesamtkraft, die vom Stößel (28) auf den Spiegel übertragen wird. Werden dagegen die Hohlräume (80 und 83) mit Druck beaufschlagt, d.h. die Bälge (70 und 73) versteift, so liegt der in Figur 6b dargestellte, umgekehrte Fall vor: Die an die Druckkammer (64) grenzende effektive Fläche des Drucktellers ist größer als die an die Druckkammer (63) grenzende Fläche des Drucktellers (67). Entsprechend ergibt sich eine nach oben gerichtete resultierende Gesamtkraft $F_a$.Die auf den Stößel (68) wirkende Gesamtkraft $Q_{ges}$ ergibt sich für das Ausführungsbeispiel nach Figur 5 bzw. Figur 6 zu

$$Q_{ges} = P_{63} \cdot \pi \cdot (r_1^2 - r_3^2) - P_{64} \cdot \pi \cdot (r_1^2 - r_2^2). \qquad (2)$$

Anhand dieser Formel ist ersichtlich, daß sich die vom Stößel (68) auf den Spiegel ausgeübte Kraft auch dann variieren läßt, wenn die Drücke in den Druckkammern (63 und 64) gleich sind.

## Patentansprüche

1.  Unterstützungssystem für Teleskopspiegel zur individuellen Einstellung, bzw. Steuerung der in einer Vielzahl von Stützpunkten auf den Spiegelkörper ausgeübten Kräfte mit

- einer passiven, astatischen Lagerung in Form eines lastverzweigten hydraulischen Systems, das den Hauptteil der Spiegellast aufnimmt, und das an den Stützpunkten jeweils aus einem tragenden Stößel (28; 68) mit daran befestigtem Druckteller (27; 67) und einem Gehäuse (21; 61) besteht, das durch eine den Druckteller tragende Membran (62), bzw. Membranen (22, 32) in zwei voneinander abgeschlossene Druckkammern (23, 24; 63, 64) unterteilt ist, und mit
- einer aktiven Lagerung, die an den Stützpunkten kraftschlüssig mit der passiven Lagerung verbunden ist und die über die Stößel individuell einstellbare bzw. steuerbare Zusatzkräfte (Fa) auf den Spiegelkörper ausübt,
  dadurch gekennzeichnet, daß als Quelle der für die aktive Lagerung nötigen Zusatzkraft der auf den Druckteller wirkende Druck ($P_{23}$, $P_{24}$; $P_{63}$, $P_{64}$) der passiven, hydraulischen Lagerung dient, und daß
- Mittel vorhanden sind, die es ermöglichen, den in jeder der Druckkammern herrschenden Druck auf eine vorbestimmte, druckaufnehmende Fläche $FL_{eff}$ der entsprechenden Seite des Drucktellers wirken zu lassen, deren Größe einstellbar ist.

2. Unterstützungssystem nach Anspruch 1, dadurch gekennzeichnet, daß zur Variation der Größe der druckaufnehmenden Fläche $FL_{eff}$ ein Teil der Fläche des Drucktellers (27;67) der passiven Lagerung an den Stützpunkten und/oder ein Teil der den Druckteller umgebenden Gehäuseflächen (21; 61) als versteifbarer Balg (22, 32; 70-73) ausgebildet ist.

3. Unterstützungssystem nach Anspruch 2, dadurch gekennzeichnet, daß Mittel vorhanden sind zur Steuerung der Steifigkeit des Balges (22, 32; 70-73) durch eine Änderung des Innendrucks ($P_{33}$, $P_{34}$; $P_{80-83}$) im Balg.

4. Unterstützungssystem nach Anspruch 2, dadurch gekennzeichnet, daß der Druckteller (27) und das Gehäuse (21) der Druckkammer (23, 24) durch zwei konzentrische Bälge (32, 22) miteinander verbunden sind, und daß Mittel vorhanden sind zur Änderung der druckaufnehmenden Fläche $FL_{eff}$ des Drucktellers durch eine gegenläufige Druckerhöhung bzw. Druckminderung in den beiden Bälgen (22, 32).

5. Unterstützungssystem nach Anspruch 2, dadurch gekennzeichnet, daß jeder Stützpunkt der astatischen Lagerung zwei Druckkammern (63, 64) aufweist, deren Druckkräfte in entgegengesetzter Richtung auf den Stützpunkt wirken, und daß Mittel zur gegenläufigen Änderung der den beiden Kammern (63, 64) zugeordneten effektiven Radien (r1 - r3, r1 - r2) des Drucktellers (67) vorhanden sind.

6. Unterstützungssystem nach Anspruch 3-5, dadurch gekennzeichnet, daß zur Erzeugung des Innendruckkes des Balges für jeden Stützpunkt ein Aktuator (37; 47) vorgesehen ist, der zwei elektrisch einstellbare Druckdosen (52;60) aufweist.

## Claims

1. Support system for a telescope mirror for individual adjustment respectively controlling of the forces at a plurality of support points on the mirror body; thereon with
   - a passive, astativ support system realised in a load distributing hydraulic system, which hold the main part of the mirror load and which at each support point has a support unit including a carrying push rod (28; 68) connected to a pressure plate (27; 67) and a housing (21; 61), said housing (21; 61) is divided in two separated pressure chambers (23, 24; 63, 64) with a membrane (62) respectively membranes (22, 32) carrying the pressure plate; and with
   - an active support system, which is connected at the support points in a force-tight manner with the passive support system and which impart an additional individual adjusted respectively controlled force ($F_a$) through the push rods on the mirror body,
     characterized in that
   - as the source of the additional force necessary for the active support system the pressure ($P_{23}$, $P_{24}$; $P_{63}$, $P_{64}$) effect on the pressure plate of the passive hydraulic support system is used, and that
   - means are present which allow it to let the pressure in each of the pressure chambers be effective for a predeterminated pressure pat area, whose sice is adjustable.

**2.** Support system according to claim 1, characterized in that for sice variation of the pressure pad area $FL_{eff}$ a part of the pressure plate (27; 67) area of the passive support system at the support points and/or a part of the housing sides (21; 61) surrounding the pressure plate is constructed as stiffened bellow units (22, 32; 70-73).

**3.** Support system according to claim 2, characterized in that means are present for controlling the stiffness of the bellow unit (22, 32; 70-73) by changing the pressure ($P_{33}$, $P_{34}$; $P_{80-83}$) inside said bellow unit.

**4.** Support system according to claim 2, characterized in that the pressure plate (27) and the housing (21) of the pressure chamber (23, 24) are connected with two concentric bellow units (32, 22) and that means are present for changing the pressure pad area $FL_{eff}$ of the pressure plate by reducing the pressure in one of said bellow units (22) while simultaneously increasing the pressure in the other one of said bellow units (31) and reverse.

**5.** Support system according to claim 2, characterized in that every support point of the astatic support system has two pressure chambers (63, 64), whose pressure forces effect in opposite direction upon the support point and that means are present for contrary changing the effective radius (r1 - r3, r1 - r2) of the pressure plate (67) allocated to the two chambers (63, 64).

**6.** Support system according to claim 3, 4 or 5, characterized in that at every support point there is a actuator mean (37, 47) for generating the pressure inside said bellow unit and that this actuator means (37, 47) has two electrically adjustable pressure cells (52; 60).

**Revendications**

**1.** Système de support pour miroir de télescope pour le réglage individuel ou la commande individuelle des forces appliquées en une multiplicité de points d'appui au corps du miroir, comportant
   - un support passif astatique sous la forme d'un système hydraulique à répartition de la charge, qui supporte la partie principale de la charge du miroir et qui est constitué, au niveau des points d'appui, respectivement par un poussoir de support (28;68) auquel est fixé un disque de pression (27;67), et un boîtier (21;61), qui est subdivisé par une membrane (62) portant le disque de pression ou par des membranes (22,32), en deux chambres (23,24;63,64) fermées l'une par rapport à l'autre, et
   - un support actif, qui, au niveau des points d'appui, est raccordé selon une liaison de force au support passif et applique, par l'intermédiaire du poussoir, des forces supplémentaires (Fa) réglables ou commandables individuellement, au corps du miroir,
   caractérisé en ce que
   - la pression ($P_{23}$, $P_{24}$; $P_{63}$, $P_{64}$), qui agit sur le disque de pression, du support hydraulique passif agit en tant que source de production de la force supplémentaire nécessaire pour le support actif, et que
   - il est prévu des moyens permettant de faire agir la pression, qui règne dans chacune des chambres de pression, sur une surface prédéterminée $FL_{eff}$, qui supporte la pression, de la face correspondante du disque de pression, dont la taille est réglable.

**2.** Système de support selon la revedication 1, caractérisé en ce que pour modifier la taille de la surface $FL_{eff}$, qui supporte la pression, une partie de la surface du disque de pression (27;67) du support passif au niveau des points d'appui et/ou une partie des surfaces (21; 61) du boîtier, qui entourent le disque de pression, est agencée sous la forme d'un soufflet (22,32;70,70), qui peut être rigidifié.

**3.** Système de support selon la revendicaton 2, caractérisé en ce qu'il est prévu des moyens pour commander la rigidité du soufflet (22;32;70-73) au moyen d'une modification de la pression intérieure ($P_{33}$, $P_{34}$; $P_{80}$-$P_{83}$) dans le soufflet.

**4.** Système de support selon la revendication 2, caractérisé en ce que le disque de pression (27) et le boîtier (21) des chambres de pression (23,24) sont reliés entre eux par deux soufflets concentriques (32,22), et qu'il est prévu des moyens pour modifier la surface $FL_{eff}$,qui supporte la pression, du disque de pression, au moyen d'accroissements ou de réductions antagonistes de la pression dans les deux soufflets (22,32).

5. Système de support selon la revendication 2, caractérisé en ce que chaque point d'appui du support astatique comporte deux chambres de pression (63,64), dont les forces de pression agissent en des sens opposés sur le point d'appui et qu'il est prévu des moyens pour modifier en des sens opposés les rayons effectifs (r1-r3, r1-r2) du disque de pression, associés aux deux chambres (63,64).

6. Système de support selon les revendications 3-5, caractérisé en ce que pour l'obtention de la pression intérieure du soufflet pour chaque point d'appui, il est prévu un actionneur (37;47), qui possède deux boîtes d'application de pression (52;60) réglables électriquement.

# Fig.1

Fig. 2

EP 0 270 967 B1

# Fig.4

37

to 22    48    to 32

53a    53b

52a    52b

50a  49  39  47    50b

# Fig. 3

58    56    54

60a    60b

to 22    to 32

59a    59b

57

51

55    61

## Fig.5

EP 0 270 967 B1

## Fig.6a

## Fig.6 b